# NEUE EUROPÄISCHE PATENTSCHRIFT

(11) **EP 3 420 258 B2**
(45) Veröffentlichungstag und Bekanntmachung des Hinweises auf die Entscheidung über den Einspruch: **28.06.2023**
(45) Hinweis auf die Patenterteilung: 12.02.2020
(21) Anmeldenummer: 17707168.5
(22) Anmeldetag: 21.02.2017
(51) Int. Cl.: F16K 31/385, F16K 31/524, F16K 11/00, F16K 31/05

(54) **VENTILBETÄTIGUNGSVORRICHTUNG**
VALVE-ACTUATING DEVICE
DISPOSITIF D'ACTIONNEMENT DE SOUPAPE

(30) Priorität: 22.02.2016 DE 202016001106 U
(43) Veröffentlichungstag der Anmeldung: 02.01.2019
(60) Teilanmeldung: 19156756.9
(73) Patentinhaber: Neoperl GmbH, 79379 Müllheim (DE)
(72) Erfinder: BIAN, Yichao, 79379 Müllheim-Hügelheim (DE)
(74) Vertreter: Mertzlufft-Paufler, Cornelius
(86) Internationale Anmeldenummer: PCT/EP2017/000242
(87) Internationale Veröffentlichungsnummer: WO 2017/144169

(56) Entgegenhaltungen:
- EP-A1- 1 903 267
- EP-A1- 2 530 365
- EP-A1- 2 865 928
- EP-A1- 2 865 929
- EP-A1- 2 865 929
- EP-A1- 2 868 953
- EP-B1- 1 548 344
- WO-A1-2014/164906
- CN-A- 101 012 889
- CN-A- 102 661 435
- CN-A- 104 896 106
- CN-A- 104 948 775
- CN-A- 104 948 777
- CN-A- 104 948 817
- CN-U- 202 927 053
- CN-U- 203 297 709
- CN-U- 203 656 296
- CN-U- 203 948 677
- DE-A1- 3 927 611
- DE-A1- 10 200 979
- DE-A1-102012 221 043
- DE-A1-102012 221 043
- DE-A1-102012 221 047
- DE-A1-102012 221 047
- DE-U1- 9 413 654
- DE-U1-202014 007 070
- FR-A1- 2 223 618
- FR-A1- 2 481 404
- GB-A- 2 064 071
- GB-A- 2 103 391
- GB-A- 2 509 796
- JP-A- H0 464 783
- JP-A- H0 464 783
- JP-A- S5 868 558
- JP-A- 2001 095 709
- JP-A- 2001 095 710
- JP-A- 2001 098 596
- JP-A- 2005 155 797
- JP-A- 2005 163 990
- JP-A- 2005 264 459
- JP-A- 2005 264 979
- JP-A- 2006 308 021
- JP-A- 2012 145 144
- JP-B2- 3 743 006
- JP-B2- 5 711 977
- JP-U- 3 132 061
- KR-A- 20130 090 635
- US-A1- 2004 135 013
- US-A1- 2013 200 282
- US-B2- 6 634 618

## Beschreibung

Die Erfindung betrifft eine Ventilbetätigungsvorrichtung, mit einem Handbedienelement und einem über das Handbedienelement betätigbaren Ventil, wobei ein Steuerelement mit dem Handbedienelement in Wirkverbindung steht, wobei das Ventil mit einem distalen Ende des Steuerelements betätigbar ist und in der Wirkverbindung zwischen dem Steuerelement und dem Handbedienelement eine Ausgleichvorrichtung angeordnet ist, welches einen in einer Aufnahme beweglich geführten Stößel aufweist und eine Relativbewegung des Handbedienelements gegen das Steuerelement zulässt, und wobei ein Rückstellelement vorhanden ist, das der Relativbewegung eine Rückstellkraft entgegensetzt.

Derartige Ventilbetätigungsvorrichtungen sind bekannt und werden verwendet, um einen Ablauf von einem Zulauf manuell trennen zu können beziehungsweise den Ablauf und den Zulauf bei Bedarf manuell zu verbinden.

Die JP H04 64783 A betrifft eine Ventilbetätigungsvorrichtung, mit einem Handbedienelement und einem über das Handbedienelement betätigbaren Ventil, wobei ein Steuerelement mit dem Handbedienelement in Wirkverbindung steht, wobei das Ventil mit einem distalen Ende des Steuerelements betätigbar ist.

Die GB 2 064 071 A betrifft eine Kontrollvorrichtung zur Betätigung eines Ventils oder dergleichen, mit einem Betätigungselement, durch dessen Betätigung das Ventil verschließbar ist.

Die FR 2 481 404 A1 betrifft eine Ventilbetätigungsvorrichtung, mit einem Handbedienelement und einem über das Handbedienelement betätigbaren Ventil, wobei ein Steuerelement mit dem Handbedienelement in Wirkverbindung steht, wobei das Ventil mit einem distalen Ende des Steuerelements betätigbar ist und in der Wirkverbindung zwischen dem Steuerelement und dem Handbedienelement eine Ausgleichvorrichtung angeordnet ist, welche einen in einer Aufnahme beweglich geführten Stößel aufweist und eine Relativbewegung des Handbedienelements gegen das Steuerelement zulässt, und wobei ein Rückstellelement vorhanden ist, das der Relativbewegung eine Rückstellkraft entgegensetzt, wobei eine Verstelleinrichtung ausgebildet ist, mit welcher ein Maximalabstand zwischen einem Ventilsitz des Ventils und dem distalen Ende des Steuerelements verstellbar ist.

Aus EP 1 548 344 B1 ist eine Ventilbetätigungsvorrichtung mit den eingangs beschriebenen Merkmalen bekannt, bei welcher der Stößel an dem Handbedienelement und die Aufnahme an dem Steuerelement ausgebildet sind. Ein Rückstellelement ist hierbei in der Aufnahme und somit in der Ausgleich- oder Puffervorrichtung angeordnet.

Der Erfindung liegt die Aufgabe zugrunde, eine Alternative zu der Lösung gemäß EP 1 548 344 B1 zu schaffen.

Die Aufgabe wird erfindungsgemäß gelöst durch die Merkmale von

Anspruch 1. Insbesondere wird somit zur Lösung der genannten Aufgabe bei einer Ventilbetätigungsvorrichtung der eingangs beschriebenen Art vorgeschlagen, dass das Rückstellelement außerhalb der Ausgleichvorrichtung angeordnet ist. Somit sind Behinderungen der Beweglichkeit des Stößels durch das Rückstellelement in der Aufnahme vermeidbar.

Erfindungsgemäß ist vorgesehen, dass der Stößel an einem proximalen Ende des Steuerelements ausgebildet ist. Somit ist einfach erreichbar, dass der Stößel und das Steuerelement aus demselben Material gefertigt sind. Es ist auch erreichbar, dass die Aufnahme und das Steuerelement aus unterschiedlichen Materialien fertigbar sind. Dies ist günstig, weil die Aufnahme als komplexe Form einfach in Kunststoff fertigbar sein kann, während für das Steuerelement zur Erreichung einer größeren Belastbarkeit und Knickfestigkeit ein metallischer Werkstoff besser geeignet sein kann.

Erfindungsgemäß ist vorgesehen, dass die Aufnahme der Ausgleichvorrichtung fest an dem Handbedienelement angeordnet ist. Somit ist die Aufnahme einfach und sicher manuell von außen betätigbar und verstellbar.

Bei einer Ausgestaltung der Erfindung kann vorgesehen sein, dass die Aufnahme eine quer zu einer Stößel-Führungsrichtung und/oder eine seitlich geöffnete Stößel-Entnahmeöffnung aufweist. Somit ist der Stößel bei einer Fertigung einfach einsetzbar.

Bei einer Ausgestaltung der Erfindung kann vorgesehen sein, dass die Aufnahme einen Anschlag bildet, gegen den das Rückstellelement den Stößel in einer Ruheposition drückt. Somit ist eine definierte Ruheposition bildbar.

Bei einer Ausgestaltung der Erfindung kann vorgesehen sein, dass eine Verstelleinrichtung ausgebildet ist, mit welcher ein Maximalabstand - beispielsweise in einer Offenstellung des Ventils - zwischen einem Ventilsitz des Ventils und dem distalen Ende des Steuerelements verstellbar ist. Von Vorteil ist dabei, dass ein Stellweg, den das Ventil, insbesondere ein, beispielsweise das weiter unten beschriebene, Ventilelement ausführen kann, zwischen einer Schließposition und einer Offenposition begrenzbar ist. Somit sind Zwischenpositionen zwischen der Schließposition und der Offenposition einstellbar, um das Ventil nicht vollständig zu öffnen. Der Maximalabstand zwischen dem Ventilsitz und dem distalen Ende des Steuerelements kann beispielsweise dadurch verstellbar sein, dass mit der Verstelleinrichtung ein Maximalabstand - beispielsweise bei ausgefahrenem Stößel in der Aufnahme der Ausgleichvorrichtung - zwischen dem Handbedienelement und dem distalen Ende des Steuerelements verstellbar ist oder verstellt wird. Beispielsweise kann hierzu das Steuerelement unabhängig vom Handbedienelement oder das Handbedienelement unabhängig vom Steuerelement in seiner Lage verstellbar sein. Alternativ oder zusätzlich kann der Maximalabstand zwischen dem Ventilsitz und dem distalen Ende des Steuerelements dadurch verstellbar sein, dass das Handbedienelement mit dem Steuerelement gemeinsam in der Lage verstellbar ist.

Bei einer Ausgestaltung der Erfindung kann vorgesehen sein, dass die Verstelleinrichtung zwischen der Ausgleichvorrichtung und dem Handbedienelement angeordnet ist. Somit ist eine kompakte Betätigungsvorrichtung ausbildbar. Die Verstelleinrichtung ist somit einfach außerhalb eines abgedichteten Bereichs des Ventils anordenbar. Hierbei ist es günstig, wenn die Verstelleinrichtung zu einer Verstellung eines Abstands zwischen der Ausgleichsvorrichtung und dem Handbedienelement ausgebildet ist. Somit ist eine einfache Begrenzung des Verstellwegs des Ventils erreichbar, indem sich eine Ruheposition des Stößels in der Aufnahme verlagert.

Bei einer Ausgestaltung der Erfindung kann vorgesehen sein, dass die Verstelleinrichtung ein Bewegungsgewinde aufweist. Somit ist eine Umsetzung einer rotatorischen Bedienbewegung in einer Bewegung, welche eine Verstellung des erwähnten Maximalabstandes zur Folge hat, möglich. Das Handbedienelement ist hierzu bevorzugt dreh- oder schwenkbar gelagert, besonders bevorzugt um eine auf das Ventil gerichtete Achse. Zu einer Betätigung des bereits erwähnten Verschlusselements kann das Handbedienelement zusätzlich verschiebbar, insbesondere auf das Ventil zu, eingerichtet sein. Dies erleichtert die Bedienbarkeit, da ein Benutzer leicht zwischen einer manuellen Betätigung durch Drücken und einem Einstellen von Zwischenpositionen durch Drehen unterscheiden kann.

Bei einer Ausgestaltung der Erfindung kann vorgesehen sein, dass die Verstelleinrichtung eine Unterstützungsfeder, mit welcher eine Ausfahrbewegung unterstützbar ist, aufweist. Somit ist eine leichtgängige Bedienbarkeit erreichbar.

Bei einer Ausgestaltung der Erfindung kann vorgesehen sein, dass das Ventil eine Druckkammer aufweist, die über eine Befüllöffnung mit einem Zulauf des Ventils und über eine Ablauföffnung mit einem Ablauf des Ventils verbunden ist, wobei mit der Druckkammer ein den Ablauf vom Zulauf trennendes Ventilelement des Ventils beaufschlagbar ist und wobei die Ablauföffnung mit einem Verschlusselement öffenbar und verschließbar ist. Somit ist ein Servo-Betätiger gebildet, welcher eine Verstärkung einer über das Handbedienelement eingebrachte Stellkraft durch einen am Zulauf anliegenden Wasserdruck bewirkt. Die beschriebene Ausgleichsvorrichtung ermöglicht hierbei, dass das Verschlusselement mit dem Ventilelement nachgeführt wird oder nachführbar ist, wenn sich der Druck in der Drucckammer aufbaut und das Ventilelement in die Schließposition gedrückt wird. Somit ist die Ablauföffnung geschlossen haltbar, indem das Verschlusseelement mit dem Ventilelement bewegbar ist. Es ist somit eine Betätigung mit vergleichsweise kleinem Kraftaufwand ausübbar. Die Verstärkung kann hierbei durch die Druckkammer erreichbar sein, die über das Stellelement zwischen einem befüllten, druckbeaufschlagten und somit schließenden Zustand und einem entleerten, freigebenden Zustand schaltbar ist. Bevorzugt ist das Verschlusselement an dem distalen Ende des Steuerelements angeordnet. Somit sind zusätzliche Übertragungselemente zwischen dem Steuerelement und dem Verschlusselement verzichtbar. Dies vereinfacht den konstruktiven Aufbau.

Bei einer Ausgestaltung der Erfindung kann vorgesehen sein, dass eine, beispielsweise die bereits erwähnte, Druckkammer des Ventils zum Handbedienelement durch eine Dichtung abgedichtet ist. Somit ist ein Abschluss der Druckkammer nach außen einfach erreichbar. Insbesondere kann hierbei vorgesehen sein, dass die Dichtung an dem Steuerelement anliegt. Somit ist ein Eintritt des Steuerelements in die Druckkammer möglich. Alternativ oder zusätzlich kann hierbei vorgesehen sein, dass die Dichtung an der Ausgleichvorrichtung anliegt. Somit ist eine alternative Einführung einer Betätigungsbewegung in die Druckkammer, insbesondere zum Verstellen eines, beispielsweise des bereits erwähnten, Veschlusselements, möglich. Die Dichtung ist hierbei bevorzugt jeweils mit dem Steuerelement mitbewegt oder an einem, beispielsweise dem bereits erwähnten, Gehäuseteil festgelegt. Dies ermöglicht eine konstruktiv einfache Ausgestaltung der Abdichtung.

Bei einer Ausgestaltung der Erfindung kann vorgesehen sein, dass das Ventilelement an einer vorzugsweise eine, beispielsweise die bereits erwähnte, Befüllöffnung einer, beispielsweise der bereits erwähnten, Druckkammer tragenden elastischen Membran aufgehängt ist. Somit ist die Befüllöffnung einfach mit der Membran und/oder einem an diesem befestigten Ventilelement mitbewegbar, was eine Selbstreinigung im Betrieb ermöglicht, beispielsweise mit einem Reinigungsstift.

Bei einer Ausgestaltung der Erfindung kann vorgesehen sein, dass eine, beispielsweise die bereits erwähnte, Druckkammer durch ein, beispielsweise das bereits erwähnte, Gehäuseteil und eine, beispielsweise die bereits erwähnte, an dem Gehäuseteil festgelegte Membran begrenzt ist. Es ist somit eine im Wesentlichen zweischalige Druckkammer bildbar, die einfach fertigbar ist. Besonders günstig ist hierbei eine Kombination mit der bereits erwähnten Abdichtung gegen das Handbedienelement. Insbesondere kann hierbei vorgesehen sein, dass die Membran zwischen dem Gehäuseteil und einem weiteren Gehäuseteil eingespannt ist. Somit ist ein einfacher und dichter Halt der Membran an dem Gehäuseteil erreichbar. Vorzugsweise bildet das weitere Gehäuseteil zumindest den Ablauf. Somit ist das weitere Gehäuseteil mit einer weiteren Funktion, insbesondere mit der Bereitstellung des bereits erwähnten Ventilsitzes, versehbar.

Bei einer Ausgestaltung der Erfindung kann vorgesehen sein, dass eine, beispielsweise die bereits erwähnte, Ablauföffnung einer, beispielsweise der bereits erwähnten, Druckkammer des Ventils in einer Verlängerung des Steuerelements angeordnet ist. Somit ist ein, beispielsweise das bereits erwähnte, Verschlusselement zum Öffnen und Schließen der Ablauföffnung durch das Steuerelement, insbesondere wenn dieses stabförmig ist, einfach und direkt ansteuerbar.

Bei einer Ausgestaltung der Erfindung kann vorgesehen sein, dass ein, beispielsweise der bereits erwähnte, Zulauf von einem, beispielsweise dem bereits erwähnten, Ablauf durch einen ringförmigen Ventilsitz, beispielsweise durch den bereits erwähnten Ventilsitz, getrennt ist. Somit ist die Ventilfunktion des Ventils einfach steuerbar. Der Ventilsitz kann hierbei als eine Auflage des bereits erwähnten Ventilelements dienen.

Bei einer Ausgestaltung der Erfindung kann vorgesehen sein, dass ein, beispielsweise der bereits erwähnte, Ablauf in einer Verlängerung der Ablauföffnung angeordnet ist. Somit ist eine platzsparend Bauweise, in der beispielsweise das Steuerelement, das Verschlusselement und das Ventilelement hintereinander auf einer gedachten Linie angeordnet sind, erreichbar.

Bei einer Ausgestaltung der Erfindung kann vorgesehen sein, dass das Rückstellelement das Steuerelement beaufschlagt. Somit ist eine unmittelbare Einbringung der Rückstellkraft auf das Steuerelement erreichbar. Es ist auch eine platzsparende Bauweise erreichbar. Das Rückstellelement kann hierbei beispielsweise auf Zug oder auf Druck beaufschlagen. Bevorzugt ist das Steuerelement durch das Rückstellelement druckbeaufschlagt. Dies ermöglicht ein geringes Baumaß längs des Steuerelements mit dem ein Abstützen der Rückstellkraft einfach erreichbar ist.

Bei einer Ausgestaltung der Erfindung kann vorgesehen sein, dass das Rückstellelement an einem, beispielsweise dem bereits erwähnten, Gehäuseteil abgestützt ist. Somit ist ein festes Widerlager bereitstellbar.

Alternativ oder zusätzlich kann bei einer Ausgestaltung der Erfindung vorgesehen sein, dass das Rückstellelement an dem Handbedienelement abgestützt ist. Dies erlaubt eine schwimmende Abstützung, bei welcher eine Abstützung an einem Gehäuseteil nicht erforderlich ist. Dies kann konstruktiv von Vorteil sein, wenn beispielsweise die Platzverhältnisse beengt sind.

Bei einer Ausgestaltung der Erfindung kann vorgesehen sein, dass das Rückstellelement eine Schraubenfeder ist. Somit ist eine Rückstellkraft mit einem konstruktiv einfachen Bauteil entwickelbar. Eine Rückstellkraft längs des Steuerelements ist einfach entwickelbar. Vorzugsweise nimmt die Schraubenfeder das Steuerelement auf. Somit kann Platz gespart werden.

Bei einer Ausgestaltung der Erfindung kann vorgesehen sein, dass das Handbedienelement von einer Handbedienelement-Rückstellfeder beaufschlagt ist. Von Vorteil ist dabei, dass eine Rückstellung des Handbedienelements unabhängig von der Ausgleichvorrichtung erreichbar ist. Insbesondere kann hierbei vorgesehen sein, dass die Handbedienelement-Rückstellfeder eine größere Kraft entwickelt als das Rückstellelement. Somit ist es einfach erreichbar, dass die Handbedienelement-Rückstellfeder die Rückstellkraft des Rückstellelements überwinden kann. Bevorzugt sind die Rückstellkräfte des Rückstellelements einerseits und der Handbedienelement-Rückstellfeder andererseits parallel und/oder gegenläufig zueinander ausgerichtet. Vorzugsweise ist vorgesehen, dass die Handbedienelement-Rückstellfeder an einem, beispielsweise dem bereits erwähnten, Gehäuseteil abgestützt ist. Somit ist ein festes Widerlager für das Handbedienelement gebildet.

Bei einer Ausgestaltung der Erfindung kann vorgesehen sein, dass die Handbedienelement-Rückstellfeder als eine Schraubenfeder ausgebildet ist. Schraubenfedern stellen konstruktiv einfache Bauteile dar, um eine beispielsweise geradlinig ausgerichtete Rückstellkraft zu entwickeln. Vorzugsweise ist vorgesehen, dass die Handbedienelement-Rückstellfeder das Steuerelement und/oder die Ausgleichvorrichtung umgreift. Somit ist eine platzsparende Anordnung möglich.

Bei einer Ausgestaltung der Erfindung kann vorgesehen sein, dass das Handbedienelement die Ausgleichvorrichtung und/oder das Steuerelement haubenförmig zumindest teilweise aufnimmt oder übergreift. Somit ist eine geringe Längsabmessung der Vorrichtung erreichbar.

Bei einer Ausgestaltung der Erfindung kann vorgesehen sein, dass das Handbedienelement über einen Anschlagpunkt des Steuerelements hinaus verstellbar ist. Bevorzugt ermöglicht die Ausgleichvorrichtung diese Verstellbarkeit. Von Vorteil ist dabei, dass eine bistabile Stellmechanik, beispielsweise eine Push-Push-Verriegelungsmechanik wie eine Kugelschreibermechanik oder eine Herzkurvenmechanik, ansteuerbar ist, wobei ein Wechsel von einer stabilen Position in eine weitere stabile Position durch ein Verstellen über die weitere stabile Position hinaus und anschließendes Zurückfallen in die weitere stabile Position erreichbar ist. Hier ermöglicht das Rückstellelement die nötige Bewegungsfreiheit zwischen der Aufnahme und dem Stößel, da das Steuerelement nicht über die weitere stabile Position, in welcher das Ventil beispielsweise schließt, hinaus bewegbar ist. Das Rückstellelement kann somit gleichzeitig eine Betätigungskraft zur Verstellung des Ventils vermitteln.

Bei einer Ausgestaltung der Erfindung kann vorgesehen sein, dass das Handbedienelement parallel zu dem Steuerelement verstellbar ist. Somit fallen eine Betätigungsrichtung und eine Stellrichtung zusammen und ist ein geringes seitliches, in Bezug auf eine Betätigungsrichtung, Baumaß erreichbar.

Bei einer Ausgestaltung der Erfindung kann vorgesehen sein, dass das Steuerelement stabförmig ausgebildet ist. Eine lineare Betätigung ist somit konstruktiv einfach erreichbar. Ein seitliches Baumaß ist gering haltbar.

Bei einer Ausgestaltung der Erfindung kann vorgesehen sein, dass das Steuerelement an einem vom Ventil abgewandten Ende eine Querschnittsverdickung aufweist. Somit ist ein Anschlag ausbildbar, mit welchem das Steuerelement in einer Ruheposition in einer, beispielsweise der bereits erwähnten, Aufnahme der Ausgleicheinheit haltbar ist.

Bei einer Ausgestaltung der Erfindung kann vorgesehen sein, dass das Steuerelement verschiebbar angeordnet ist. Somit ist das Steuerelement einfach linear führbar. Alternativ oder zusätzlich kann vorgesehen sein, dass die Ausgleichvorrichtung verschiebbar angeordnet ist, wodurch dessen lineare Führung erreichbar ist.

Bei einer Ausgestaltung der Erfindung kann vorgesehen sein, dass das Steuerelement verschiebbar an einem, beispielsweise dem bereits erwähnten, Gehäuseteil gelagert ist. Dies ermöglicht eine einfache Führung einer Verstellbewegung des Steuerelements. Alternativ oder zusätzlich kann vorgesehen sein, dass die Ausgleichvorrichtung verschiebbar an einem, beispielsweise dem bereits erwähnten, Gehäuseteil gelagert ist. Somit ist die Ausgleichsvorrichtung mit geringem konstruktivem Aufwand führbar.

Bei einer Ausgestaltung der Erfindung kann vorgesehen sein, dass die Aufnahme und/oder das Handbedienelement mit einer bistabilen Stellmechanik verbunden sind. Somit ist das Ventil zwischen einer Offenstellung und einer Schließstellung, die jeweils stabile Positionen darstellen, verstellbar. Beispielsweise kann die Stellmechanik als Push-Push-Verriegelungsmechanik, insbesondere als Kugelschreibermechanik und/oder als Herzkurvenmechanik, ausgebildet sein. Dies erlaubt ein einfaches Betätigen und einen einfachen Wechsel zwischen den Positionen, da ein Benutzer nur Drücken muss, um den Wechsel zu erreichen.

Bei einer Ausgestaltung der Erfindung kann vorgesehen sein, dass das Ventil eine Druckkammer aufweist, die über eine Befüllöffnung mit einem Zulauf des Ventils und über eine Ablauföffnung mit einem Ablauf des Ventils verbunden ist, wobei mit der Druckkammer ein den Ablauf vom Zulauf trennendes Ventilelement des Ventils beaufschlagbar ist und wobei die Ablauföffnung mit einem Verschlusselement öffenbar und verschließbar ist, dadurch gekennzeichnet, dass eine mit dem Verschlusselement abdeckbare Querschnittsfläche an der Ablauföffnung größer ist als eine Querschnittsfläche des Steuerelements an dessen Austritt aus der Druckkammer. Somit ist vermeidbar, dass - beispielsweise bei einem in die Druckkammer vermittelten Druckschlag - sich das Verschlusselement selbsttätig von der Ablauföffnung entfernt und diese unkontrolliert freigibt. Von Vorteil ist weiter, dass ein Rückstellelement, beispielsweise das bereits beschriebene Rückstellelement, mit welchem das Verschlusselement in seine Schließstellung überführbar ist, mit einer geringen Federkraft ausstattbar ist. Dies hat den weiteren Vorteil, dass eine Handbedienelement-Rückstellfeder, beispielsweise die bereits beschriebene Handbedienelement-Rückstellfeder, welche eine Rückstellbewegung des Handbedienelements erzwingt, ebenfalls nicht mit großer Federkraft dimensioniert werden muss. Auf diese Weise ist ein leicht gängiges Schaltverhalten erreichbar.

Vorzugsweise ist hierbei vorgesehen, dass das Verschlusselement an dem distalen Ende des Steuerelements angeordnet ist. Es ist somit eine Ansteuerung des Verschlusselements - beispielweise über das bereits beschriebene Handbedienelement - einfach ausführbar. Die abdeckbare Querschnittfläche kann beispielsweise wenigstens doppelt so groß wie die Querschnittsfläche des Steuerelements sein. Beispielsweise kann die abdeckbare Querschnittsfläche durch einen Pilotventilsitz, der mit dem Verschlusselement zusammenwirkt, definiert sein.

Bei einer Ausgestaltung der Erfindung kann vorgesehen sein, dass an dem Ventilement ein Pilotventilsitz, der mit dem Verschlusselement verschließbar und freigebbar ist, ausgebildet ist und dass die Ablauföffnung in Strömungsrichtung hinter dem Pilotventilsitz eine vorzugsweise trichterförmige Verengung formt. Von Vorteil ist dabei, dass die Auslassöffnung möglichst klein, beispielsweise im Durchmesser höchstens halb so groß oder sogar höchstens ein Viertel so groß wie der Pilotventilsitz, ausbildbar ist.

Bei einer Ausgestaltung der Erfindung kann vorgesehen sein, dass an der Ablauföffnung ein Rohrstutzen angesetzt ist, welcher auch bei geöffnetem Ventil in den Ablauf hineinragt und ein Rückströmen aus einem Hauptströmungsweg des geöffneten Ventils an die Ablauföffnung verhindert. Es ist somit ein gleichrichtender Rohrstutzen bereitgestellt, der die Hauptströmung von dem erwähnten Pilotventil fernhält. Somit kann ein Widerstand gegen ein Schließen des Pilotventils, der von der Hauptströmung entwickelt wird, reduziert werden. Somit ist erreichbar, dass das Pilotventil auch bei hohen Drücken im Hauptströmungsweg geschlossen werden kann.

Bei einer Ausgestaltung der Erfindung kann vorgesehen sein, dass eine Länge, mit der das Ventilelement mit dem Rohrstutzen in Schließstellung des Ventils in den Ablauf ragt, mindestens das 1,5 fache, vorzugsweise mindestens das 2fache, einer Hubhöhe des Ventilelements beträgt.

Die Erfindung wird nun anhand von Ausführungsbeispielen näher erläutert, ist aber nicht auf diese Ausführungsbeispiele beschränkt. Weitere Ausführungsbeispiele ergeben sich durch Kombination der Merkmale einzelner oder mehrerer Schutzansprüche untereinander und/oder mit einzelnen oder mehreren Merkmalen der Ausführungsbeispiele.

Es zeigt:
- Fig. 1: einen Längsschnitt durch eine erfindungsgemäße Ventilbetätigungsvorrichtung, wobei ein Handbedienelement in einer unteren Ruheposition, in welcher eine Ablauföffnung eines Ventils verschlossen ist, angeordnet ist,
- Fig. 2: eine weitere Längsschnittdarstellung der Ventilbetätigungsvorrichtung gemäß Figur 1 in einer um 90° um die Längsachse gedrehten Schnittebene,
- Fig. 3: eine dreidimensionale Außenansicht auf die Ventilbetätigungsvorrichtung gemäß Figur 1,
- Fig. 4: eine Figur 1 entsprechende Längsschnittdarstellung, bei welcher das Handbedienelement in einer oberen Ruheposition, in welcher die Ablauföffnung des Ventils freigegeben ist, angeordnet ist,
- Fig. 5: eine weitere Längsschnittdarstellung zu Figur 4 in einer um 90° um die Längsachse gedrehten Schnittdarstellung,
- Fig. 6: eine Explosionsdarstellung der erfindungsgemäßen Ventilbetätigungsvorrichtung gemäß Figur 1,
- Fig. 7: eine Figur 1 entsprechende Längsschnittdarstellung einer weiteren erfindungsgemäßen Ventilbetätigungsvorrichtung,
- Fig. 8: eine Figur 2 entsprechende weitere Längsschnittdarstellung der Ventilbetätigungsvorrichtung gemäß Figur 7,
- Fig. 9: eine dreidimensionale Außenansicht auf die Ventilbetätigungsvorrichtung gemäß Figur 7,
- Fig. 10: eine Figur 4 entsprechende Längsschnittdarstellung der Ventilbetätigungsvorrichtung gemäß Figur 7,
- Fig. 11: eine Figur 5 entsprechende Längsschnittdarstellung zu der Ventilbetätigungsvorrichtung gemäß Figur 7 mit gegenüber Figur 10 um 90° gedrehter Schnittebene,
- Fig. 12: eine Explosionsdarstellung der Ventilbetätigungsvorrichtung gemäß Figur 7,
- Fig. 13: eine Längsschnittdarstellung einer weiteren erfindungsgemäßen Ventilbetätigungsvorrichtung in Schließposition des Ventils,
- Fig. 14: eine zu Figur 13 korrespondierende Längsschnittdarstellung der Ventilbetätigungsvorrichtung nach Figur 13 in einer Stellung kurz vor Öffnung des Ventils,
- Fig. 15: eine zu Figur 13 und Figur 14 korrespondierende Längsschnittdarstellung der Ventilbetätigungsvorrichtung nach Figur 13 in Offenstellung,
- Fig. 16: eine zu Figur 13 bis Figur 15 korrespondierende Längsschnittdarstellung der Ventilbetätigungsvorrichtung nach Figur 13 in einer teilgeöffneten Zwischenstellung

- Fig. 17: eine weitere erfindungsgemäße Ventilbetätigungsvorrichtung in einer Axial- oder Längsschnittdarstellung in geschlossener Schaltposition des Ventils,
- Fig. 18: eine Einzelheit aus Fig. 17 und
- Fig. 19: die Ventilbetätigungsvorrichtung aus Fig. 17 in einer geöffneten Schaltposition des Ventils.

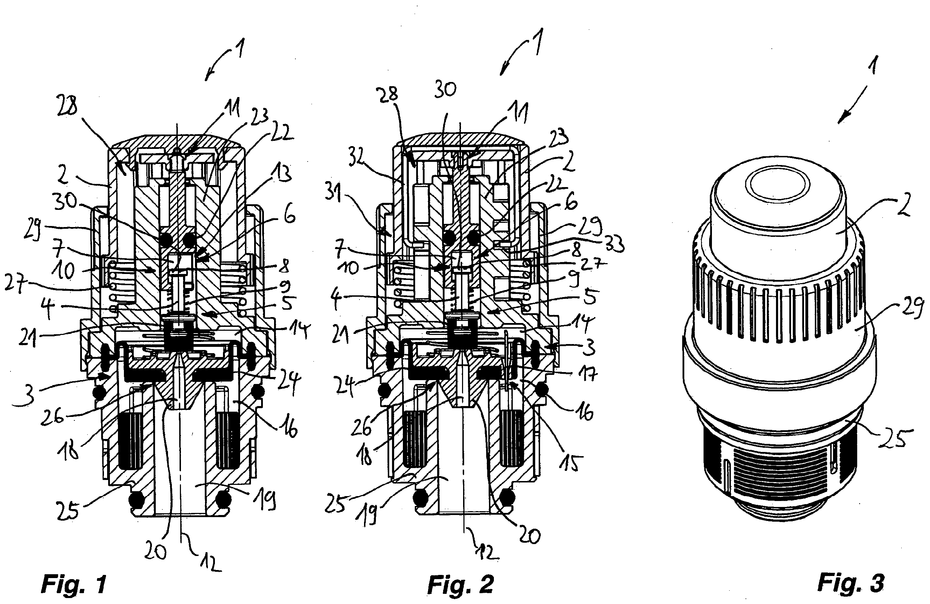

Figur 1 und Figur 2 zeigen eine erfindungsgemäße Ventilbetätigungsvorrichtung 1 in zueinander um 90° gedrehte Längsschnittdarstellungen. Figur 3 zeigt die Ventilbetätigungsvorrichtung 1 in einer dreidimensionalen Schrägansicht.

Die Ventilbetätigungsvorrichtung 1 hat ein Handbedienelement 2 mit welchem ein im Inneren der Ventilbetätigungsvorrichtung 1 angeordnetes Ventil 3 zwischen einer geschlossenen Position und einer geöffneten Position schaltbar ist.

Zwischen dem Handbedienelement 2 und dem Ventil 3 ist ein Steuerelement 4 angeordnet, welches eine Bedienbewegung an dem Handbedienelement 2 an das Ventil 3 vermittelt.

An einem distalen Ende 5 ist das Steuerelement 4 derart mit dem Ventil 3 verbunden, dass das Ventil 3 mit dem Steuerelement 4 zwischen der Offenstellung und der Schließstellung schaltbar ist.

Zwischen dem Handbedienelement 2 und dem Steuerelement 4 ist eine Ausgleichvorrichtung 6 ausgebildet, welche eine Betätigung des Handbedienelements 2 an das Steuerelement 4 vermittelt.

Hierzu weist die Ausgleichvorrichtung 6 eine Aufnahme 7 auf, in der ein Stößel 8 gleitend beweglich linear geführt ist.

Diese Bewegungsfreiheit führt dazu, dass das Steuerelement 4 relativ zu dem Handbedienelement 2 beweglich ist.

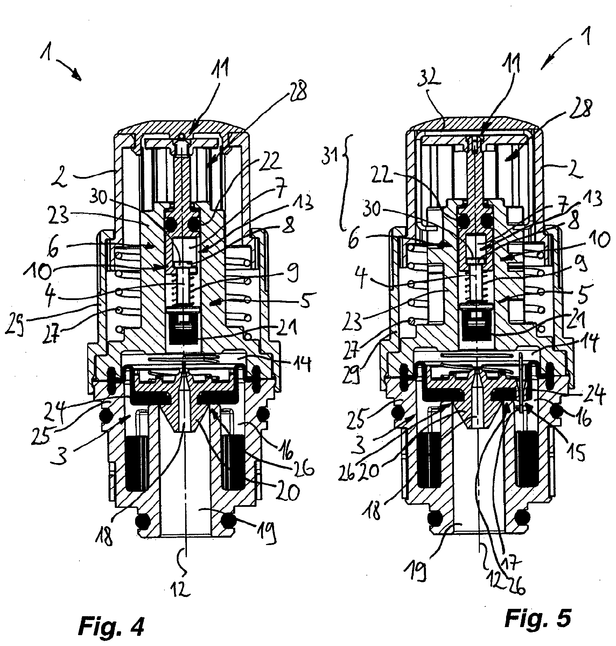

Um das Steuerelement 4 in einer bevorzugten Ruheposition relativ zu dem Handbedienelement 2 zu halten, ist ein Rückstellelement 9 ausgebildet. Dieses Rückstellelement 9 entwickelt eine Rückstellkraft, um das Steuerelement 4, sofern die Position dieses Steuerelements 4 dies zulässt, in der in Figur 4 und Figur 5 gezeigten Ruheposition in der Aufnahme 7 zu halten.

Aus den Darstellungen ist ersichtlich, dass das Rückstellelement 9 außerhalb der Ausgleichvorrichtung 6 und insbesondere außerhalb der Aufnahme 7 angeordnet ist. Somit ist eine Behinderung der Gleitbewegung des Stößels 8 in der Aufnahme 7 vermeidbar. Der Stößel 8, der in der Aufnahme 7 geführt ist, ist direkt an dem proximalen Ende 10 des Steuerelements 4 ausgebildet.

Die Aufnahme 7 der Ausgleichvorrichtung 6 ist dagegen über eine Rastverbindung 11 fest mit dem Handbedienelement 2 verbunden.

Durch die Längsachse 12 der Ventilbetätigungsvorrichtung 1 ist eine Stößel-Führungsrichtung vorgegeben, entlang der der Stößel 8 in der Aufnahme 7 verschieblich geführt ist.

Quer zu dieser Stößel-Führungsrichtung ist die Aufnahme 7 mit einer Stößel-Entnahmeöffnung 13 versehen, durch welche der Stößel 8 an dem Steuerelement 4 seitlich einsetzbar ist.

Dies ermöglicht eine einstückige Ausbildung des Stößels 8 an dem Steuerelement 4.

Das Ventil 3 weist eine Druckkammer 14 auf, welche über eine Befüllöffnung 15 mit einem Zulauf 16 des Ventils 3 verbunden ist.

Ein Reinigungsstift 17 verhindert, dass sich die Befüllöffnung 15 zusetzen kann.

Sobald in dem Zulauf 16 ein Wasserdruck anliegt, wird die Druckkammer 14 somit über die Befüllöffnung 15 befüllt.

Die Druckkammer 14 ist über eine Ablauföffnung 18 mit einem Ablauf 19 des Ventils 3 verbunden.

Mit dem Ventilelement 20 ist der Ablauf 19 vor dem Zulauf 16 trennbar.

An dem distalen Ende 5 ist das Steuerelement 4 mit einem Verschlusselement 21 verbunden.

In dem Ventilelement 20 ist korrespondierend zu dem Verschlusselement 21 die Ablauföffnung 18 ausgebildet, welche - je nach Position des Handbedienelements 2 - mit dem Verschlusselement 21 verschließbar oder öffenbar, also freigebbar ist.

Mit dem Verschlusselement 21 ist somit steuerbar, ob sich in der Druckkammer 14 über die Befüllöffnung 15 ein Druck aufbaut, was bei verschlossener Ablauföffnung 18 der Fall ist, oder ob dieser aufgebaute Druck sich wieder abbaut, in dem die Ablauföffnung 18 durch das Verschlusselement 21 freigegeben ist. Hierzu ist ein Öffnungsdurchmesser der Ablauföffnung 18 größer als ein Öffnungsdurchmesser der Befüllöffnung 15 gewählt.

Bei aufgebautem Druck wird das Ventilelement 20 somit gegen den Ablauf 19 gedrückt, um den Zulauf 16 vom Ablauf 19 zu trennen. Bei entlasteter Druckkammer 14 (bei geöffneter Ablauföffnung 18) führt der Druck im Zulauf 16 dazu, dass das Ventilelement 20 vom Zulauf 16 weggedrückt wird und diesen Zulauf 16 freigibt. Das Ventil 3 ist dann in seiner Offenstellung überführt.

Die Figuren 4 und 5 zeigen hierbei eine Zwischenposition, in welcher das Verschlusselement 21 bereits von der Ablauföffnung 18 gelöst ist, um diese freizugeben. Der Druck in der Druckkammer 14 ist jedoch noch nicht abgebaut, sodass das Ventilelement 20 weiterhin den Ablauf 19 verschließt.

Das Steuerelement 4 ist in der Druckkammer 14 angeordnet. Die Druckkammer 14 ist gegen das Handbedienelement 2 durch eine Dichtung 22 abgedichtet. Die Dichtung 22 liegt hierbei an einem Gehäuseteil 23 an und wird mit der Ausgleichvorrichtung 6 mitbewegt.

Die Druckkammer 14 wird durch eine elastische Membran 24 abgeschlossen. Die Membran 24 trägt das Ventilelement 20 und die an dem Ventilelement 20 ausgebildete Befüllöffnung 15.

Das bereits erwähnte Gehäuseteil 23 und die Membran 24 begrenzen somit die Druckkammer 14.

Die Membran 24 ist hierbei zwischen dem Gehäuseteil 23 und einem weiteren Gehäuseteil 25, welches den Zulauf 16 und den Ablauf 19 bildet, eingespannt.

Aus den Zeichnungen ist ersichtlich, dass die Ablauföffnung 18 und der Ablauf 19 in einer Verlängerung des Steuerelements 4 längs der Längsachse 12, also längs der Verstellrichtung des Steuerelements 4, hintereinander angeordnet sind.

Die Abdichtung des Ablaufs 19 gegen den Zulauf 16 durch das Ventilelement 20 ist dadurch erreicht, dass das Ventilelement 20 in der Schließposition gemäß Figur 1 und Figur 2 durch den Druck in der Druckkammer 14 gegen einen Ventilsitz 26 an dem Ablauf 19 gepresst wird.

Das Rückstellelement 9 ist als Schraubenfeder ausgebildet und beaufschlägt das Steuerelement 4 auf Druck. Hierbei stützt sich das Rückstellelement 9 über die Aufnahme 7 an dem Handbedienelement 2 ab.

Das Handbedienelement 2 wird von einer Handbedienelement-Rückstellfeder 27 beaufschlagt, die sich an dem Gehäuseteil 23 abstützt.

Die Handbedienelement-Rückstellfeder 27 entwickelt hierbei eine größere Kraft als das Rückstellelement 4.

Sowohl das Rückstellelement 4 als auch die Handbedienelement-Rückstellfeder 27 sind als Schraubenfedern ausgebildet, die das Steuerelement 4 umgreifen und in sich aufnehmen.

Die Ausgleichvorrichtung 6 ist ebenfalls zumindest teilweise in der Handbedienelement-Rückstellfeder 27 angeordnet.

Das Handbedienelement 2 ist haubenförmig ausgebildet und nimmt in seinem Inneren 28 die Ausgleichvorrichtung 6 auf.

Hierbei wird das Handbedienelement 2 in einer Hülse 29 gehalten, die einen Anschlag am Handbedienelement 2 bildet.

Die Figuren 1 und 2 zeigen das Ventil 3 in der Schließposition, in welcher das Verschlusselement 21 die Ablauföffnung 18 verschließt. Dieses Verschließen ist zum Druckaufbau in der Drucckammer 14 bereits erforderlich, wenn das Ventilelement 20 noch nicht am Ventilsitz 26 ankommt. In diesem Augenblick muss daher das Handbedienelement 2 bereits in der unteren Position sein. Um hier ein Nachlaufen des Ventilelements 20 zu erlauben, führt ein Drücken auf das Handbedienelement 2 dazu, dass sich zunächst der Stößel 8 in der Aufnahme 7 bewegt. Mit dem sich absenkenden Ventilelement 20 führt die Spannung des Rückstellelements 9 dazu, dass sich der Stößel 8 wieder zu seinem Anschlag in der Aufnahme 7 bewegt.

Darüber hinaus erlaubt die Beweglichkeit des Stößels 8 in der Aufnahme 7, dass das Handbedienelement 2 über ein durch das Verschlusselement 21 vorgegebenes Ende des Verstellwegs für das Stellelement 4 hinaus bewegen lässt. Dies ist bei einer Push-Push-Verriegelungsmechanik von Vorteil, da dann über den unteren (in Bezug auf die Push-Bewegung) Totpunkt oder stabilen Punkt hinausgegangen werden kann, um das Handbedienelement zurückzuholen.

Aus der Figur 1 ist im Vergleich zu der Figur 4 noch ersichtlich, dass das Handbedienelement 2 parallel zu dem Steuerelement 4 längs der Längsachse 12 verstellbar ist.

Um ein Anliegen an einer Begrenzung der Aufnahme 7 zu erlauben, ist an dem proximalen Ende 10 des Steuerelements 4 der Stößel 8 als eine Querschnittsverdickung 30 ausgebildet. Im Ausführungsbeispiel ist diese Querschnittsverdickung 30 einstückig mit dem Steuerelement 4 verbunden und an diesem angeformt.

Eine bistabile Stellmechanik 31 mit einem Bügel 32 und einer Steuernut 33 bildet eine Push-Push-Verriegelungsmechanik, beispielsweise einer Kugelschreibermechanik oder einer Herzkurvenmechanik, mit welcher das Handbedienelement 2 an dem Gehäuseteil 23 zwischen einer oberen Position (Figur 4 und Figur 5) und einer unteren Position (Figur 1 und Figur 2) durch Drücken längs der Längsrichtung verstellbar ist.

Diese beiden Stellpositionen bewirken in der beschriebenen Weise durch den Druckaufbau oder den Druckabbau in der Drucckammer 14 die Schließstellung (Figur 1 und Figur 2) und die offenstellung (Figur 4 und Figur 5) des Ventils 3.

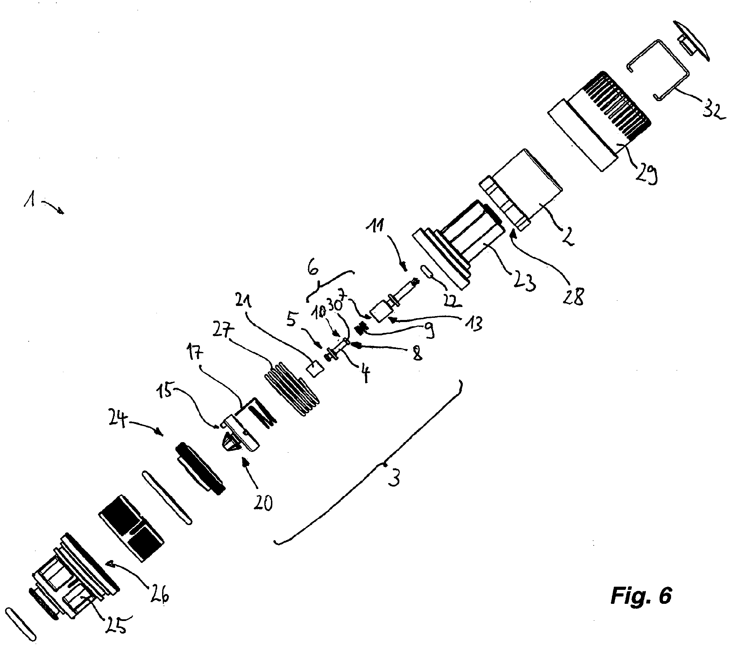

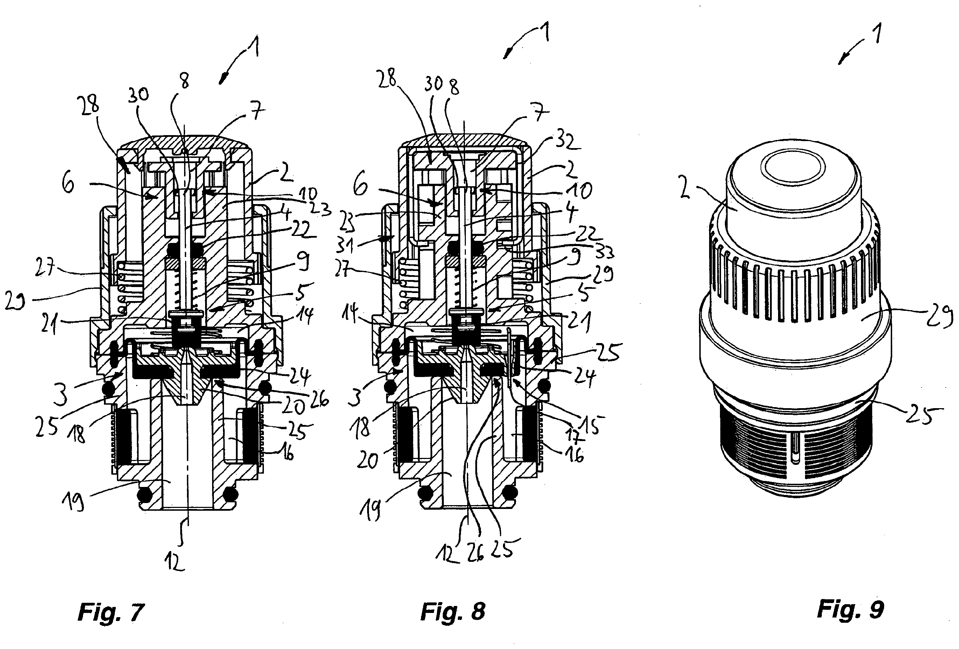

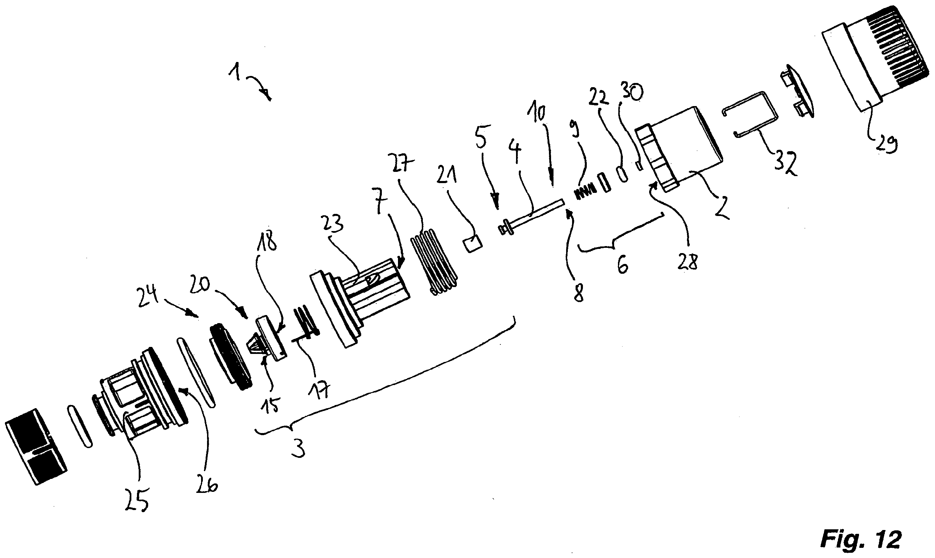

Die Figuren 7 bis 12 zeigen ein weiteres erfindungsgemäßes Ausführungsbeispiel einer Ventilbetätigungsvorrichtung. Bauteile oder Funktionseinheiten, die funktionell und/oder konstruktiv zu Bauteilen oder Funktionseinheiten des vorangehenden Ausführungsbeispiels identisch oder gleichartig sind, sind mit denselben Bezugszeichen bezeichnet und nicht noch einmal gesondert beschrieben. Die Ausführungen zu den Figuren 1 bis 6 gelten daher zu den Figuren 7 bis 12 entsprechend.

Das Ausführungsbeispiel gemäß den Figuren 7 bis 12 unterscheidet sich von dem vorangehendem Ausführungsbeispiel dadurch, dass die Dichtung 22 in dem Gehäuseteil 23 festgelegt ist, sodass das Steuerelement 4 durch das Gehäuseteil 23 nach Außen geführt ist. Die Ausgleichvorrichtung 6 befindet sich somit hinter der Dichtung 22 und daher außerhalb der Druckkammer 14. Die Dichtung 22 liegt hierbei an dem Steuerelement 4 an.

Das Ausführungsbeispiel gemäß Figuren 7 bis 12 unterscheidet sich von dem vorangegangenen Ausführungsbeispiel ferner dadurch, dass das Rückstellelement 9 an dem Gehäuseteil 23 abgestützt ist. Damit das Handbedienelement 2 das Steuerelement 4 in die obere, die Ablauföffnung 18 öffnende Position überführen kann, ist die Handbedienelement-Rückstellfeder 27 stärker als das Rückstellelement 9 ausgebildet.

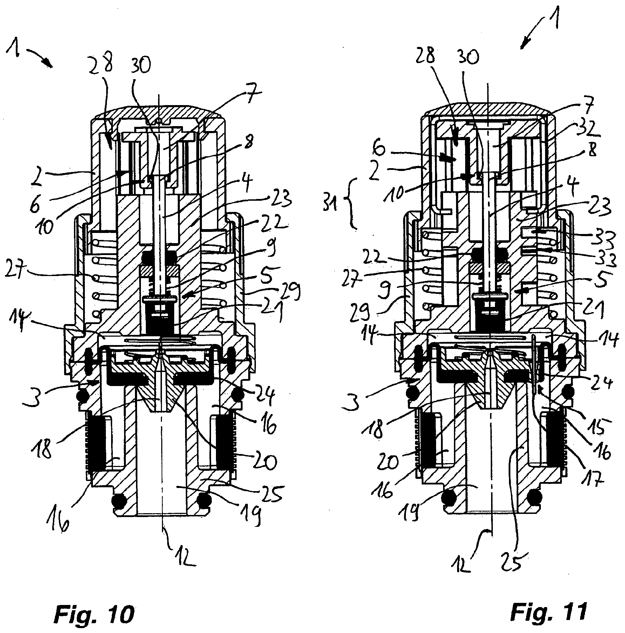

Das Steuerelement 4 ist verschiebbar an dem Gehäuseteil 23 angeordnet. In den Figuren 7 und 8 ist wieder die Schließposition des Ventils 3 gezeigt, während die Figuren 10 und 11 die Offenpositionen des Ventils 3 zeigen.

Es ist ersichtlich, dass in den Figuren 7 und 8 das Verschlusselement 21 die Ablauföffnung 18 verschließt, während das Verschlusselement 21 in den Figuren 10 und 11 die Ablauföffnung 18 freigibt, sodass die Druckkammer 14 entlastet wird.

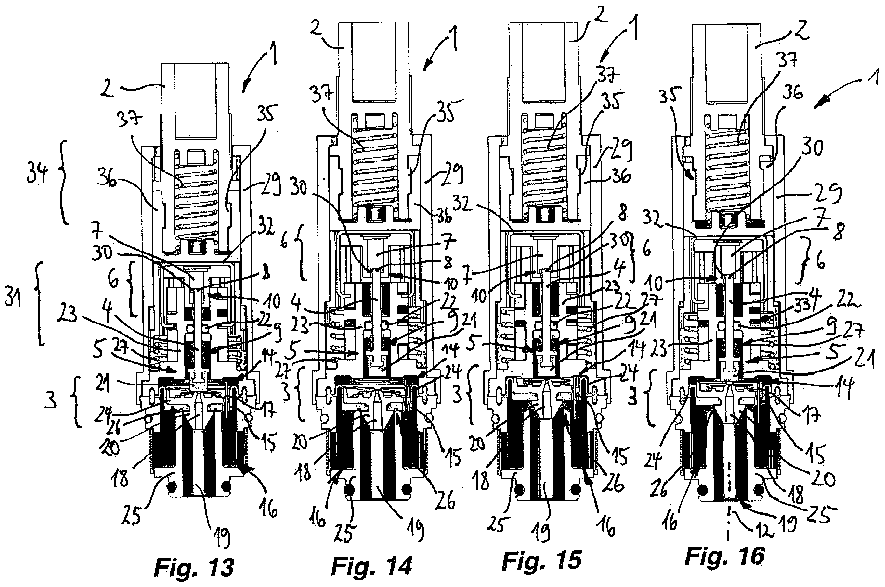

Die Figuren 13 bis 16 zeigen ein weiteres erfindungsgemäßes Ausführungsbeispiel einer Ventilbetätigungsvorrichtung. Wieder sind Bauteile und Funktionseinheiten, die konstruktiv und/oder funktionell zu Bauteilen oder Funktionseinheiten der vorangehenden Ausführungsbeispiele gleichartig oder identisch sind, mit denselben Bezugszeichen bezeichnet und nicht noch einmal gesondert beschrieben. Die Ausführungen zu den Figuren 1 bis 12 gelten daher zu den Figuren 13 bis 16 entsprechend.

Das Ausführungsbeispiel gemäß Figur 13 bis 16 zeigt zunächst in Figur 13 die Schließstellung des Ventils 3, in welcher das Verschlusselement 21 die Ablauföffnung 18 verschließt. Somit ist in der Druckkammer 14 über die Befüllöffnung 15 aus dem Zulauf 16 ein Druck aufgebaut, welcher das Ventilelement 20 in den Ventilsitz 26 drückt.

Figur 14 zeigt eine Zwischenstellung, in welcher das Handbedienelement 2 bereits in die obere Position verfahren ist. Dies ist durch Drücken auf das Handbedienelement 2 erfolgt, wodurch die bistabile Verstellmechanik 31 in die obere Position überführt wurde.

In dieser Situation gibt das Verschlusselement 21 die Ablauföffnung 18 frei. Da jedoch noch Druck in der Druckkammer 14 aufgebaut ist, verbleibt das Ventil zunächst in seiner Schließstellung.

Die Ablauföffnung 18 ist jedoch - wie bereits erwähnt - größer dimensioniert als die Befüllöffnung 15, sodass sich der Druck in der Druckkammer 14 über die Ablauföffnung 18 und den Ablauf 19 abbaut.

Dies führt dazu, dass der Druck in dem Zulauf 16 die Membran 24 mit dem Ventilelement 20 anhebt, sodass das Ventil 3 geöffnet wird.

Dieser Zustand ist in Figur 15 dargestellt.

Das Ausführungsbeispiel gemäß Figuren 13 bis 16 unterscheidet sich von den vorangegangenen Ausführungsbeispielen dadurch, dass zusätzlich zwischen der Ausgleichvorrichtung 6 und dem Handbedienelement 2 eine Verstelleinrichtung 34 ausgebildet ist, mit welcher ein Maximalabstand, also ein Abstand bei maximal ausgefahrenem Steuerelement 4 aus der Aufnahme 7, zwischen dem Verschlusselement 21 und dem Handbedienelement 2 verstellbar ist. Auf diese Weise ist der Maximalabstand zwischen dem Ventilsitz 26 und dem distalen Ende 9 des Steuerelements 4, also ein Abstand zwischen dem Ventilsitz 26 einerseits und dem distalen Ende 9 beziehungsweise dem an diesem befestigten Verschlusselement 21 andererseits, in der Offenstellung des Ventils 3, einstellbar. Ein Öffnungsquerschnitt am Ventilsitz 26 in der Offenstellung ist somit veränderbar.

Dies ist dadurch ermöglicht, dass an dem Handbedienelement 2 ein Bewegungsgewinde 35 ausgebildet ist, mit welchem eine Drehbewegung des Handbedienelements 2 in eine Verschiebungsbewegung längs der Längsachse 12 eines hülsenförmigen Zwischenteils umsetzbar ist. Das Handbedienelement 2 ist somit in dem beschriebenen Ausführungsbeispiel nicht nur entlang der Längsachse 12 verschiebbar, sondern zusätzlich um die Längsachse 12 drehoder schwenkbar eingerichtet.

Figur 16 zeigt eine gegenüber Figur 15 verschobene Position des Zwischenteils 36.

Durch diese Verschiebung wird ein Abstand zwischen der Aufnahme 7 der Ausgleichvorrichtung 6 und dem Handbedienelement 2 verändert.

Dies führt dazu, dass gegenüber der Situation in Figur 15 das Verschlusselement 21 näher an die Ablauföffnung 18 herangeführt wird.

Dies führt zu einem kurzzeitigen Verschluss der Ablauföffnung 18 und damit einem erneuten Druckaufbau in der Druckkammer 14. Da das Handbedienelement 2 weiterhin in seiner oberen Position ist, wird das Ventilelement 20 durch den Druckaufbau nicht bis zum Ventilsitz 26 gedrückt, sondern wird nur solange nach unten gedrückt, bis die Ablauföffnung 18 wieder geöffnet ist. Denn das Verschlusselement 21 kann wegen der Position des Bedienelements 2 dem Ventilelement 20 nicht weiter folgen, bis dieses den Ventilsitz 26 erreicht.

In diesem geöffneten Zustand wird die Drucckammer 14 wieder entlastet, sodass das Ventilelement 20 wieder bestrebt ist, erneut nach oben zu gelangen. Es stellt sich somit ein schwebender Gleichgewichtszustand ein, in welchem der Zulauf 16 teilweise geöffnet ist, sodass ein gegenüber Figur 15 verringerter Strom zwischen Zulauf 16 und Ablauf 19 eingestellt ist. Es ist somit erreicht, dass sich in der Offenstellung ein gegenüber Figur 15 verringerter Maximalabstand zwischen dem Ventilsitz 26 und dem distalen Ende 9 des Steuerelements 4 einstellt.

Bei einem weiteren Ausführungsbeispiel ist das Handbedienelement 2 gemeinsam mit dem Steuerelement 4 durch eine Verstelleinrichtung 34, beispielsweise ein Bewegungsgewinde 35, längs der Längsachse 12 verstellbar angeordnet, um das distale Ende 9 in der Offenstellung des Ventils 3 näher an den Ventilsitz 26 zu bringen oder weiter von diesem zu entfernen.

Eine Unterstützungsfeder 37 unterstützt in den Figuren 13 bis 16 das Ausfahren des Bedienelements 2 aus dem Zwischenteil 36, welches durch das Bewegungsgewinde 35 gesteuert ist.

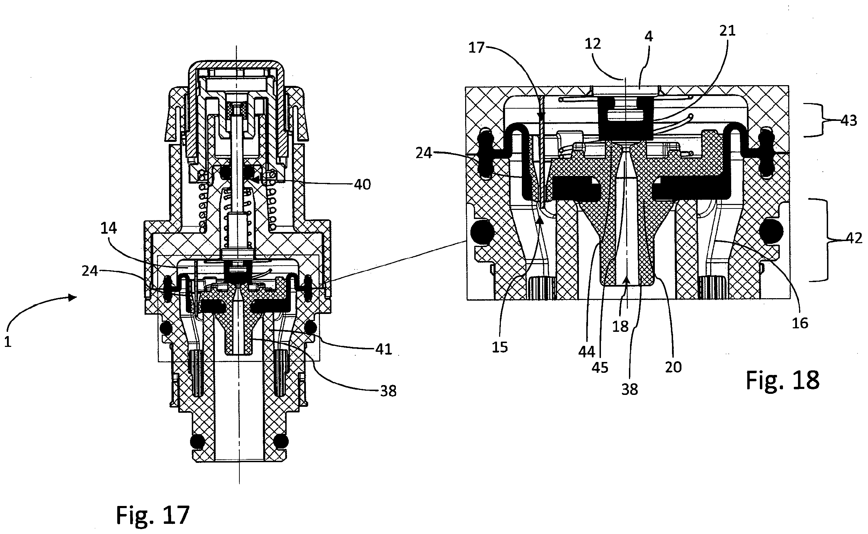

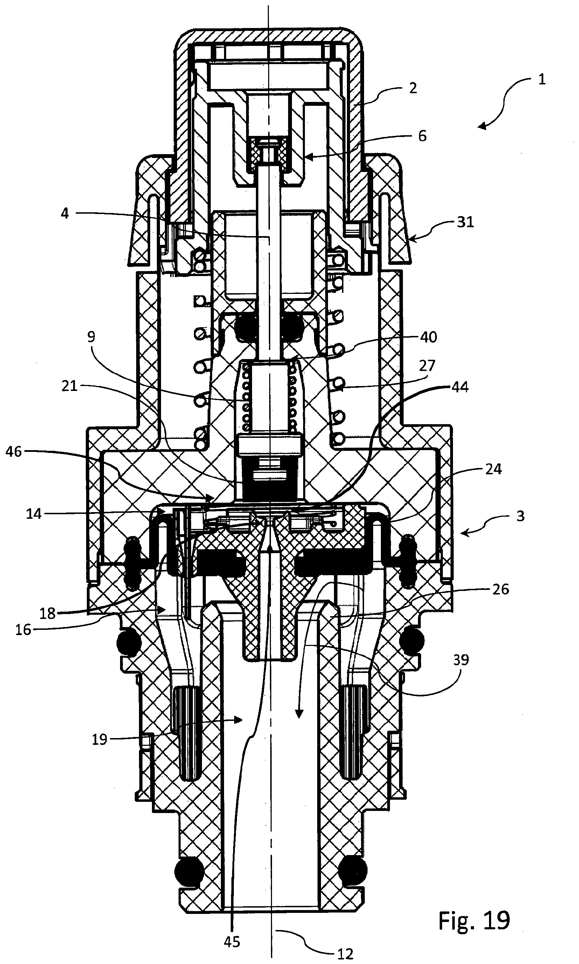

Die Figuren 17 bis 19 zeigen ein weiteres erfindungsgemäßes Ausführungsbeispiel einer Ventilbetätigungsvorrichtung 1. Wieder sind Bauteile und Funktionseinheiten, die konstruktiv und/oder funktionell zu Bauteilen oder Funktionseinheiten der vorangehenden Ausführungsbeispiele gleichartig oder identisch sind, mit denselben Bezugszeichen bezeichnet und nicht noch einmal gesondert beschrieben. Die Ausführungen zu den Figuren 1 bis 16 gelten daher zu den Figuren 17 bis 19 entsprechend.

Die Ventilbetätigungsvorrichtung 1 unterscheidet sich von den vorangehenden Ausführungsbeispielen dadurch, dass eine Querschnittsfläche an der Ablauföffnung 18, die durch das Verschlusselement 21 abdeckbar ist, vergrößert ist.

Die Querschnittsfläche ist hierbei so groß, dass das Verschlusselement 21 mit dem Steuerelement 4 durch einen Innendruck in der Druckkammer 14 in die Schließstellung überführt wird.

Dies wird dadurch erreicht, dass die mit dem Verschlusselement 21 abdeckbare Querschnittsfläche an der Ablauföffnung 18 größer ist als eine Querschnittsfläche des Steuerelements 4 an dessen Austritt aus der Druckkammer 14, also im Bereich einer Durchtrittsöffnung 40.

Die abdeckbare Querschnittsfläche an der Ablauföffnung 18 wird durch einen Pilotventilsitz 44 definiert, der mit dem Verschlusselement 21 verschließbar und freigebbar ist und mit diesem ein Pilotventil 46 formt.

Somit kann das Rückstellelement 9 mit einer geringen Federkraft dimensioniert werden. Die ermöglicht, dass die Handbedienelement-Rückstellfeder 27 ebenfalls nicht mit großer Federkraft dimensioniert werden muss. Auf diese Weise ist ein leicht gängiges Schaltverhalten erreichbar.

Die Ablauföffnung 18 beschreibt in Strömungsrichtung hinter dem Pilotventilsitz 44 eine Verengung 45, die beispielsweise trichterförmig sein kann und die auf einen sehr kleinen Innendurchmesser und/oder Innenquerschnitt der Ablauföffnung 18 an deren engster Stelle führt.

Die Ventilbetätigungsvorrichtung 1 nach Fig. 17 bis 19 unterscheidet sich weiter von den vorangehenden Ausführungsbeispielen dadurch, dass an der Ablauföffnung 18 ein Rohrstutzen 38 angesetzt ist. Dieser ragt in allen Schaltstellungen, also auch bei geöffnetem Ventil 3, in den Ablauf 19 hin und verhindert ein Rückströmen aus einem Hauptströmungsweg 39 des geöffneten Ventils 3 an oder in die Ablauföffnung 18.

Der Rohrstutzen 38 hat allgemein einen Außendurchmesser, der kleiner als ein Innendurchmesser des Ventilsitzes 26 oder des Ablaufs 19 ist, beispielsweise höchstens halb so groß.

Dies wird im Ausführungsbeispiel dadurch erreicht, dass eine Länge 42, mit der das Ventilelement 20 mit dem Rohrstutzen 38 in Schließstellung des Ventils 3 in den Ablauf 19 ragt, also eine Länge 42 zwischen dem Ventilsitz 26 und einem freien Ende des Rohrstutzens 38, mindestens das 1,5fache, vorzugsweise sogar mindestens das 2fache, einer Hubhöhe 43 des Ventilelements 20 beträgt. Die Hubhöhe 43 kann hierbei durch eine Dimension der Druckkammer 14 oder auf andere Weise, beispielsweise durch Anschläge für das Ventilelement 20, gegeben sein.

Bei der Ventilbetätigungsvorrichtung 1 wird vorgeschlagen, zwischen einem Handbedienelement 2 und einem Steuerelement 4, mit welchem ein Ventil 3 zwischen einer Offenposition und einer Schließposition verstellbar ist, eine Ausgleichvorrichtung 6 auszubilden, mit welcher das Steuerelement 4 gegen eine Rückstellkraft eines Rückstellelements 9 relativ zu dem Handbedienelement 2 und auf dieses zu oder von diesem weg verfahrbar ist, wobei das Rückstellelement 9 außerhalb der Ausgleichvorrichtung 6 angeordnet und/oder ein Stößel 8 an dem Steuerelement 4 angeordnet und in einer Aufnahme 7 der Ausgleichvorrichtung 6 geführt ist, wobei zusätzlich oder alternativ eine Verstelleinrichtung 34 ausgebildet ist, mit welcher das Steuerelement 4 von dem Handbedienelement 2 entfernbar oder auf dieses zu bewegbar ist.

### Bezugszeichenliste

- 1: Ventilbetätigungsvorrichtung
- 2: Handbedienelement
- 3: Ventil
- 4: Steuerelement
- 5: distales Ende
- 6: Ausgleichvorrichtung
- 7: Aufnahme
- 8: Stößel
- 9: Rückstellelement
- 10: proximales Ende
- 11: Rastverbindung
- 12: Längsachse
- 13: Stößel-Entnahmeöffnung
- 14: Druckkammer
- 15: Befüllöffnung
- 16: Zulauf
- 17: Reinigungsstift
- 18: Ablauföffnung
- 19: Ablauf
- 20: Ventilelement
- 21: Verschlusselement
- 22: Dichtung
- 23: Gehäuseteil
- 24: Membran
- 25: weiteres Gehäuseteil
- 26: Ventilsitz
- 27: Handbedienelement-Rückstellfeder
- 28: Inneres von 2
- 29: Hülse
- 30: Querschnittsverdickung
- 31: bistabile Stellmechanik
- 32: Bügel
- 33: Steuernut
- 34: Verstelleinrichtung
- 35: Bewegungsgewinde
- 36: Zwischenteil
- 37: Unterstützungsfeder
- 38: Rohrstutzen
- 39: Hauptströmungsweg
- 40: Durchtrittsöffnung
- 41: Ventilstutzen
- 42: Länge
- 43: Hubhöhe
- 44: Pilotventilsitz
- 45: Verengung
- 46: Pilotventil

## Patentansprüche

1. Ventilbetätigungsvorrichtung (1), mit einem Handbedienelement (2) und einem über das Handbedienelement (2) betätigbaren Ventil (3), wobei ein Steuerelement (4) mit dem Handbedienelement (2) in Wirkverbindung steht, wobei das Ventil (3) mit einem distalen Ende (5) des Steuerelements (4) betätigbar ist und in der Wirkverbindung zwischen dem Steuerelement (4) und dem Handbedienelement (2) eine Ausgleichvorrichtung (6) angeordnet ist, welche einen in einer Aufnahme (7) beweglich geführten Stößel (8) aufweist und eine Relativbewegung des Handbedienelements (2) gegen das Steuerelement (4) zulässt, und wobei ein Rückstellelement (9) vorhanden ist, das der Relativbewegung eine Rückstellkraft entgegensetzt, **dadurch gekennzeichnet,**
- **dass** das Rückstellelement (9) außerhalb der Ausgleichvorrichtung (6) angeordnet ist und
- **dass** der Stößel (8) an einem proximalen Ende (10) des Steuerelements (4) ausgebildet ist und
- **dass** die Aufnahme (7) der Ausgleichvorrichtung (6) fest an dem Handbedienelement (2) angeordnet ist.

2. Ventilbetätigungsvorrichtung (1) nach einem der vorangehenden Ansprüche, **dadurch gekennzeichnet, dass** das Rückstellelement (9) das Steuerelement (4) beaufschlagt.

3. Ventilbetätigungsvorrichtung (1) nach einem der vorangehenden Ansprüche, **dadurch gekennzeichnet, dass** die Aufnahme (7) eine quer zu einer Stößel-Führungsrichtung und seitlich geöffnete Stößel-Entnahmeöffnung (13) aufweist und/oder dass die Aufnahme (7) einen Anschlag bildet, gegen den das Rückstellelement (9) den Stößel (8) in eine Ruheposition drückt.

4. Ventilbetätigungsvorrichtung (1)nach einem der vorangehenden Ansprüche, wobei eine Verstelleinrichtung (34) ausgebildet ist, mit welcher ein Maximalabstand zwischen einem Ventilsitz (26) des Ventils (3) und dem distalen Ende (5) des Steuerelements (4) verstellbar ist, **dadurch gekennzeichnet, dass** mittels der Verstelleinrichtung (34) ein Abstand zwischen der Aufnahme (7) der Ausgleichvorrichtung (6) und dem Handbedienelement (2) veränderbar ist.

5. Ventilbetätigungsvorrichtung (1) nach Anspruch 4, **dadurch gekennzeichnet, dass** die Verstelleinrichtung (34) zwischen der Ausgleichvorrichtung (6) und dem Handbedienelement (2) angeordnet und zu einer Verstellung eines Abstands zwischen der Ausgleichvorrichtung (6) und dem Handbedienelement (2) ausgebildet ist und/oder dass die Verstelleinrichtung (34) ein Bewegungsgewinde (35) und eine Unterstützungsfeder (37), mit welcher eine Ausfahrbewegung unterstützbar ist, aufweist.

6. Ventilbetätigungsvorrichtung (1) nach einem der vorangehenden Ansprüche, **dadurch gekennzeichnet, dass** das Handbedienelement (2) verschiebbar angeordnet ist.

7. Ventilbetätigungsvorrichtung (1) nach einem der vorangehenden Ansprüche, **dadurch gekennzeichnet, dass** das Ventil (3) eine Druckkammer (14) aufweist, die über eine Befüllöffnung (15) mit einem Zulauf (16) des Ventils (3) und über eine Ablauföffnung (18) mit einem Ablauf (19) des Ventils (3) verbunden ist, wobei mit der Druckkammer (14) ein den Ablauf (19) vom Zulauf (16) trennendes Ventilelement (20) des Ventils (3) beaufschlagbar ist und wobei die Ablauföffnung (18) mit einem Verschlusselement (21) öffenbar und verschließbar ist.

8. Ventilbetätigungsvorrichtung (1) nach einem der vorangehenden Ansprüche, **dadurch gekennzeichnet, dass** die oder eine Druckkammer (14) des Ventils (3) zum Handbedienelement (2) durch eine Dichtung (22) abgedichtet ist.

9. Ventilbetätigungsvorrichtung (1) nach einem der vorangehenden Ansprüche, **dadurch gekennzeichnet, dass** das Ventilelement (20) an einer Befüllöffnung (15) der oder einer Druckkammer (14) tragenden elastischen Membran (24) aufgehängt ist.

10. Ventilbetätigungsvorrichtung (1) nach einem der vorangehenden Ansprüche, **dadurch gekennzeichnet, dass** die oder eine Druckkammer (14) des Ventils (3) durch das oder ein Gehäuseteil (23) und die oder eine an dem Gehäuseteil (23) festgelegte Membran (24) begrenzt ist.

11. Ventilbetätigungsvorrichtung (1) nach einem der vorangehenden Ansprüche, **dadurch gekennzeichnet, dass** die oder eine Ablauföffnung (18) der oder einer Druckkammer (14) des Ventils (3) in einer Verlängerung des Steuerelements (4) angeordnet ist und/oder dass der oder ein Ablauf (19) in einer Verlängerung der Ablauföffnung (18) angeordnet ist.

12. Ventilbetätigungsvorrichtung (1) nach einem der vorangehenden Ansprüche, **dadurch gekennzeichnet, dass** der oder ein Zulauf (16) von dem oder einem Ablauf (19) durch den oder einen ringförmigen Ventilsitz (26) getrennt ist.

13. Ventilbetätigungsvorrichtung (1) nach einem der vorangehenden Ansprüche, **dadurch gekennzeichnet, dass** das Rückstellelement (9) das Steuerelement (4) druckbeaufschlagt.

14. Ventilbetätigungsvorrichtung (1) nach einem der vorangehenden Ansprüche, **dadurch gekennzeichnet, dass** das Rückstellelement (9) an dem oder einem Gehäuseteil (23) und/oder an dem Handbedienelement (2) abgestützt ist.

15. Ventilbetätigungsvorrichtung (1) nach einem der vorangehenden Ansprüche, **dadurch gekennzeichnet, dass** das Handbedienelement (2) von einer Handbedienelement-Rückstellfeder (27) beaufschlagt ist.

16. Ventilbetätigungsvorrichtung (1) nach einem der vorangehenden Ansprüche, **dadurch gekennzeichnet, dass** das Handbedienelement (2) die Ausgleichvorrichtung (6) und das Steuerelement (4) haubenförmig zumindest teilweise aufnimmt oder übergreift.

17. Ventilbetätigungsvorrichtung (1) nach einem der vorangehenden Ansprüche, **dadurch gekennzeichnet, dass** das Handbedienelement (2) über einen Anschlagpunkt des Steuerelements (4) hinaus verstellbar ist.

18. Ventilbetätigungsvorrichtung (1) nach einem der vorangehenden Ansprüche, **dadurch gekennzeichnet, dass** das Steuerelement (4) stabförmig ausgebildet ist und an einem vom Ventil (3) abgewandten Ende eine Querschnittsverdickung (30) aufweist und/oder dass das Steuerelement (4) verschiebbar angeordnet und an dem oder einem Gehäuseteil (23) gelagert ist.

19. Ventilbetätigungsvorrichtung (1) nach einem der vorangehenden Ansprüche, **dadurch gekennzeichnet, dass** die Aufnahme (7) und/oder das Handbedienelement (2) mit einer bistabilen Stellmechanik (31) verbunden sind.

20. Ventilbetätigungsvorrichtung (1) nach einem der vorangehenden Ansprüche, wobei das Ventil (3) eine Druckkammer (14) aufweist, die über eine Befüllöffnung (15) mit einem Zulauf (16) des Ventils (3) und über eine Ablauföffnung (18) mit einem Ablauf (19) des Ventils (3) verbunden ist, wobei mit der Druckkammer (14) ein den Ablauf (19) vom Zulauf (16) trennendes Ventilelement (20) des Ventils (3) beaufschlagbar ist und wobei die Ablauföffnung (18) mit einem Verschlusselement (21) öffenbar und verschließbar ist, **dadurch gekennzeichnet, dass** eine mit dem Verschlusselement (21) abdeckbare Querschnittsfläche an der Ablauföffnung (18) größer ist als eine Querschnittsfläche des Steuerelements (4) an dessen Austritt aus der Druckkammer (14), und dass die Druckkammer (14) des Ventils (3) zum Handbedienelement (2) durch eine an dem Steuerelement (4) anliegende Dichtung (22) abgedichtet ist.

21. Ventilbetätigungsvorrichtung (1) nach Anspruch 20, **dadurch gekennzeichnet, dass** an dem Ventilelement (20) ein Pilotventilsitz (44), der mit dem Verschlusselement (21) verschließbar und freigebbar ist, ausgebildet ist und dass die Ablauföffnung (18) in Strömungsrichtung hinter dem Pilotventilsitz (44) eine Verengung (45) formt.

22. Ventilbetätigungsvorrichtung (1) nach Anspruch 20, **dadurch gekennzeichnet, dass** an der Ablauföffnung (18) ein Rohrstutzen (38) angesetzt ist, welcher auch bei geöffnetem Ventil (3) in den Ablauf (19) hineinragt und ein Rückströmen aus einem Hauptströmungsweg (39) des geöffneten Ventils (3) an die Ablauföffnung (18) verhindert, so dass ein Widerstand gegen ein Schließen des Ventils (3), der von der Hauptströmung entwickelt wird, reduzierbar ist, wobei der Rohrstutzen (38) als ein gleichrichtender Rohrstutzen bereitgestellt ist, der die Hauptströmung von der Ablauföffnung (18) fernhält, und wobei das Rückstellelement (9) das Steuerelement (4) beaufschlagt.

23. Ventilbetätigungsvorrichtung (1) nach Anspruch 22, **dadurch gekennzeichnet, dass** eine Länge (42), mit der das Ventilelement (20) mit dem Rohrstutzen (38) in Schließstellung des Ventils (3) in den Ablauf (19) ragt, mindestens das 1,5 fache einer Hubhöhe (43) des Ventilelements (20) beträgt.

## Claims

1. Valve-actuating device (1), comprising a manual operating element (2) and a valve (3) which can be actuated by means of the manual operating element (2), wherein a control element (4) is operatively connected to the manual operating element (2), wherein the valve (3) can be actuated by a distal end (5) of the control element (4), and a compensating device (6) is arranged in operative connection between the control element (4) and the manual operating element (2), which compensating device has a plunger (8), which is movably guided in a receptacle (7), and allows a relative movement of the manual operating element (2) with respect to the control element (4), and wherein a restoring element (9) is present which counters the relative movement with a restoring force, **characterized**
- **in that** the restoring element (9) is arranged outside the compensating device (6), and
- **in that** the plunger (8) is formed on a proximal end (10) of the control element (4), and
- **in that** the receptacle (7) of the compensating device (6) is arranged fixedly on the manual operating element (2).

2. Valve-actuating device (1) according to one of the preceding claims, **characterized in that** the restoring element (9) exerts load on the control element (4).

3. Valve-actuating device (1) according to one of the preceding claims, **characterized in that** the receptacle (7) has a plunger extraction opening (13) open transversely to a plunger guide direction and laterally, and/or **in that** the receptacle (7) forms a stop against which the restoring element (9) presses the plunger (8) into an inoperative position.

4. Valve-actuating device (1) according to one of the preceding claims, wherein an adjusting device (34) is formed by means of which a maximum distance between a valve seat (26) of the valve (3) and the distal end (5) of the control element (4) can be adjusted, **characterized in that** a distance between the receptacle (7) of the compensating device (6) and the manual operating element (2) is variable by means of the adjusting device (34).

5. Valve-actuating device (1) according to Claim 4, **characterized in that** the adjusting device (34) is arranged between the compensating device (6) and the manual operating element (2) and is designed to adjust a distance between the compensating device (6) and the manual operating element (2), and/or **in that** the adjusting device (34) has a movement thread (35) and a supporting spring (37) by means of which a deployment movement can be supported.

6. Valve-actuating device (1) according to one of the preceding claims, **characterized in that** the manual operating element (2) is arranged displaceably.

7. Valve-actuating device (1) according to one of the preceding claims, **characterized in that** the valve (3) has a pressure chamber (14) which is connected via a filling opening (15) to an inlet (16) of the valve (3) and via an outlet opening (18) to an outlet (19) of the valve (3), wherein a valve element (20) of the valve (3) that separates the outlet (19) from the inlet (16) can be subjected to load by the pressure chamber (14) and wherein the outlet opening (18) can be opened and closed by a closure element (21).

8. Valve-actuating device (1) according to one of the preceding claims, **characterized in that** the or a pressure chamber (14) of the valve (3) is sealed with respect to the manual operating element (2) by means of a seal (22).

9. Valve-actuating device (1) according to one of the preceding claims, **characterized in that** the valve element (20) is suspended on an elastic membrane (24) which has a filling opening (15) of the or a pressure chamber (14).

10. Valve-actuating device (1) according to one of the preceding claims, **characterized in that** the or a pressure chamber (14) of the valve (3) is delimited by the or a housing part (23) and the or a membrane (24) secured on the housing part (23).

11. Valve-actuating device (1) according to one of the preceding claims, **characterized in that** the or an outlet opening (18) of the or a pressure chamber (14) of the valve (3) is arranged in an extension of the control element (4), and/or **in that** the or an outlet (19) is arranged in an extension of the outlet opening (18).

12. Valve-actuating device (1) according to one of the preceding claims, **characterized in that** the or an inlet (16) is separated from the or an outlet (19) by the or an annular valve seat (26).

13. Valve-actuating device (1) according to one of the preceding claims, **characterized in that** the restoring element (9) exerts pressure load on the control element (4) .

14. Valve-actuating device (1) according to one of the preceding claims, **characterized in that** the restoring element (9) is supported on the or a housing part (23) and/or on the manual operating element (2).

15. Valve-actuating device (1) according to one of the preceding claims, **characterized in that** the manual operating element (2) is subjected to load by a manual operating element restoring spring (27).

16. Valve-actuating device (1) according to one of the preceding claims, **characterized in that** the manual operating element (2) at least partially receives or engages over the compensating device (6) and the control element (4) in a hood-like manner.

17. Valve-actuating device (1) according to one of the preceding claims, **characterized in that** the manual operating element (2) is adjustable beyond a stop point of the control element (4).

18. Valve-actuating device (1) according to one of the preceding claims, **characterized in that** the control element (4) is bar-shaped and has a cross-sectional thickening (30) at an end remote from the valve (3), and/or **in that** the control element (4) is arranged displaceably and is mounted on the or a housing part (23) .

19. Valve-actuating device (1) according to one of the preceding claims, **characterized in that** the receptacle (7) and/or the manual operating element (2) are/is connected to a bistable adjusting mechanism (31).

20. Valve-actuating device (1) according to one of the preceding claims, wherein the valve (3) has a pressure chamber (14) which is connected via a filling opening (15) to an inlet (16) of the valve (3) and via an outlet opening (18) to an outlet (19) of the valve (3), wherein a valve element (20) of the valve (3) that separates the outlet (19) from the inlet (16) can be subjected to load by the pressure chamber (14) and wherein the outlet opening (18) can be opened and closed by a closure element (21), **characterized in that** a cross-sectional area which can be covered by means of the closure element (21) at the outlet opening (18) is larger than a cross-sectional area of the control element (4) at its outlet from the pressure chamber (14), and **in that** the pressure chamber (14) of the valve (3) is sealed off with respect to the manual operating element (2) by means of a seal (22) which bears against the control element (4).

21. Valve-actuating device (1) according to Claim 20, **characterized in that**, on the valve element (20), there is formed a pilot valve seat (44) which can be closed and opened by means of the closure element (21), and **in that** the outlet opening (18) forms, downstream of the pilot valve seat (44) in a flow direction, a constriction (45).

22. Valve-actuating device (1) according to Claim 20, **characterized in that**, at the outlet opening (18), there is attached a pipe stub (38) which, even when the valve (3) is open, projects into the outlet (19) and prevents a backflow from a main flow path (39) of the open valve (3) to the outlet opening (18), such that a resistance, generated by the main flow, to a closure of the valve (3) can be reduced, wherein the pipe stub (38) is provided as a rectifying pipe stub which keeps the main flow remote from the outlet opening (18), and wherein the restoring element (9) exerts load on the control element (4).

23. Valve-actuating device (1) according to Claim 22, **characterized in that** a length (42) with which the valve element (20) projects with the pipe stub (38) into the outlet (19) in the closed position of the valve (3) amounts to at least 1.5 times a stroke height (43) of the valve element (20).

## Revendications

1. Dispositif d'actionnement de soupape (1), comprenant un élément à commande manuelle (2) et une soupape (3) qui peut être actionnée par le biais de l'élément à commande manuelle (2), dans lequel un élément de commande (4) est en liaison fonctionnelle avec l'élément à commande manuelle (2), dans lequel la soupape (3) peut être actionnée avec une extrémité distale (5) de l'élément de commande (4) et, dans la liaison fonctionnelle, est disposé entre l'élément de commande (4) et l'élément à commande manuelle (2) un moyen de compensation (6) qui présente un poussoir (8) guidé de manière mobile dans un logement (7) et autorise un mouvement relatif de l'élément à commande manuelle (2) contre l'élément de commande (4), et dans lequel un élément de rappel (9) est présent et oppose une force de rappel au mouvement relatif, **caractérisé en ce que**,
- l'élément de rappel (9) est disposé à l'extérieur du moyen de compensation (6) et
- **en ce que** le poussoir (8) est configuré à une extrémité proximale (10) de l'élément de commande (4) et
- **en ce que** le logement (7) du moyen de compensation (6) est disposé de manière fixe sur l'élément à commande manuelle (2).

2. Dispositif d'actionnement de soupape (1) selon l'une des revendications précédentes, **caractérisé en ce que** l'élément de rappel (9) sollicite l'élément de commande (4).

3. Dispositif d'actionnement de soupape (1) selon l'une des revendications précédentes, **caractérisé en ce que** le logement (7) présente une ouverture de prélèvement de poussoir (13) transversalement à une direction de guidage de poussoir et ouverte latéralement et/ou **en ce que** le logement (7) forme une butée contre laquelle l'élément de rappel (9) pousse le poussoir (8) dans une position de repos.

4. Dispositif d'actionnement de soupape (1) selon l'une des revendications précédentes, dans lequel un moyen d'ajustement (34) est configuré, avec lequel une distance maximale entre un siège de soupape (26) de la soupape (3) et l'extrémité distale (5) de l'élément de commande (4) peut être ajustée, **caractérisé en ce qu'**à l'aide du moyen d'ajustement (34) une distance entre le logement (7) du moyen de compensation (6) et l'élément à commande manuelle (2) peut être modifiée.

5. Dispositif d'actionnement de soupape (1) selon la revendication 4, **caractérisé en ce que** le moyen d'ajustement (34) est disposé entre le moyen de compensation (6) et l'élément à commande manuelle (2) et est configuré pour un ajustement d'une distance entre le moyen de compensation (6) et l'élément à commande manuelle (2) et/ou **en ce que** le moyen d'ajustement (34) présente un filetage de déplacement (35) et/ou un ressort de soutien (37), avec lequel un mouvement d'entraînement peut être soutenu.

6. Dispositif d'actionnement de soupape (1) selon l'une des revendications précédentes, **caractérisé en ce que** l'élément à commande manuelle (2) est disposé de manière mobile.

7. Dispositif d'actionnement de soupape (1) selon l'une des revendications précédentes, **caractérisé en ce que** la soupape (3) présente une chambre de pression (14) qui est reliée, par le biais d'une ouverture de chargement (15), à une alimentation (16) de la soupape (3) et, par le biais d'une ouverture d'évacuation (18), à une évacuation (19) de la soupape (3), dans lequel un élément de soupape (20) de la soupape (3) séparant l'évacuation (19) de l'alimentation (16) peut être sollicité avec la chambre de pression (14) et dans lequel l'ouverture d'évacuation (18) peut être ouverte et fermée avec un élément de fermeture (21).

8. Dispositif d'actionnement de soupape (1) selon l'une des revendications précédentes, **caractérisé en ce que** la ou une chambre de pression (14) de la soupape (3) est rendue étanche par rapport à l'élément à commande manuelle (2) par le biais d'un joint d'étanchéité (22).

9. Dispositif d'actionnement de soupape (1) selon l'une des revendications précédentes, **caractérisé en ce que** l'élément de soupape (20) est suspendu à une ouverture de chargement (15) de la ou une membrane élastique (24) portant la chambre de pression (14).

10. Dispositif d'actionnement de soupape (1) selon l'une des revendications précédentes, **caractérisé en ce que** la ou une chambre de pression (14) de la soupape (3) est délimitée par la ou une partie de boîtier (23) et la ou une membrane (24) fixée à la partie de boîtier (23).

11. Dispositif d'actionnement de soupape (1) selon l'une des revendications précédentes, **caractérisé en ce que** la ou une ouverture d'évacuation (18) de la ou d'une chambre de pression (14) de la soupape (3) est disposée dans un prolongement de l'élément de commande (4) et/ou **en ce que** la ou une évacuation (19) est disposée dans un prolongement de l'ouverture d'évacuation (18).

12. Dispositif d'actionnement de soupape (1) selon l'une des revendications précédentes, **caractérisé en ce que** la ou une alimentation (16) est séparée de la ou une évacuation (19) par le ou un siège de soupape (26) annulaire.

13. Dispositif d'actionnement de soupape (1) selon l'une des revendications précédentes, **caractérisé en ce que** l'élément de rappel (9) sollicite sous pression l'élément de commande (4).

14. Dispositif d'actionnement de soupape (1) selon l'une des revendications précédentes, **caractérisé en ce que** l'élément de rappel (9) est appuyé sur la ou une partie de boîtier (23) et/ou sur l'élément à commande manuelle (2).

15. Dispositif d'actionnement de soupape (1) selon l'une des revendications précédentes, **caractérisé en ce que** l'élément à commande manuelle (2) est sollicité par un ressort de rappel (27) de l'élément à commande manuelle.

16. Dispositif d'actionnement de soupape (1) selon l'une des revendications précédentes, **caractérisé en ce que** l'élément à commande manuelle (2) reçoit le moyen de compensation (6) et l'élément de commande (4), ou empiète sur ceux-là, au moins partiellement à la manière d'une coiffe.

17. Dispositif d'actionnement de soupape (1) selon l'une des revendications précédentes, **caractérisé en ce que** l'élément à commande manuelle (2) peut être ajusté au-delà d'un point de butée de l'élément de commande (4).

18. Dispositif d'actionnement de soupape (1) selon l'une des revendications précédentes, **caractérisé en ce que** l'élément de commande (4) est configuré sous la forme d'une barre et/ou présente, à une extrémité opposée de la soupape (3), un épaississement de section transversale (30) et/ou **en ce que** l'élément de commande (4) est monté mobile et disposé sur la ou une partie de boîtier (23).

19. Dispositif d'actionnement de soupape (1) selon l'une des revendications précédentes, **caractérisé en ce que** le logement (7) et/ou l'élément à commande manuelle (2) sont reliés à un mécanisme de réglage bistable (31).

20. Dispositif d'actionnement de soupape (1) selon l'une des revendications précédentes, dans lequel la soupape (3) présente une chambre de pression (14) qui est reliée, par le biais d'une ouverture de chargement (15), à une alimentation (16) de la soupape (3) et, par le biais d'une ouverture d'évacuation (18), à une évacuation (19) de la soupape (3), dans lequel un élément de soupape (20) de la soupape (3) séparant l'évacuation (19) de l'alimentation (16) peut être sollicité avec la chambre de pression (14) et dans lequel l'ouverture d'évacuation (18) peut être ouverte et fermée avec un élément de fermeture (21), **caractérisé en ce qu'**une surface en coupe transversale qui peut être recouverte de l'élément de fermeture (21) est au niveau de l'ouverture d'évacuation (18) plus grande qu'une surface en coupe transversale de l'élément de commande (4) au niveau de sa sortie de la chambre de pression (14), et **en ce que** la chambre de pression (14) de la soupape (3) peut être rendue étanche vis-à-vis de l'élément à commande manuelle (2) par le biais d'un joint d'étanchéité (22) situé au niveau de l'élément de commande (4).

21. Dispositif d'actionnement de soupape (1) selon la revendication 20, **caractérisé en ce qu'**au niveau de l'élément de soupape (20), est configuré un siège de soupape pilote (44), qui permet de fermer et libérer l'élément de fermeture (21), et **en ce que** l'ouverture d'évacuation (18) forme un rétrécissement (45) en aval du siège de soupape pilote (44) dans la direction d'écoulement.

22. Dispositif d'actionnement de soupape (1) selon la revendication 20, **caractérisé en ce qu'**au niveau de l'ouverture d'évacuation (18), est appliqué un manchon tubulaire (38), lequel fait saillie dans l'évacuation (19) même lorsque la soupape (3) est ouverte et empêche un courant de retour provenant de la trajectoire d'écoulement principal (39) de la soupape (3) au niveau de l'ouverture d'évacuation (18) de sorte qu'une résistance contre une fermeture de la soupape (3), qui est développée par l'écoulement principal, puisse être réduite, dans lequel le manchon tubulaire (38) est fourni sous la forme d'un manchon tubulaire de redressement qui éloigne l'écoulement principal de l'ouverture d'évacuation (18) et dans lequel l'élément de rappel (9) sollicite l'élément de commande (4).

23. Dispositif d'actionnement de soupape (1) selon la revendication 22, **caractérisé en ce qu'**une longueur (42), avec laquelle l'élément de soupape (20) fait saillie dans l'évacuation (19) avec le manchon tubulaire (38) dans la position de fermeture de la soupape (3), représente au moins 1,5 fois une hauteur de course (43) de l'élément de soupape (20).
